# EUROPÄISCHE PATENTSCHRIFT

(11) **EP 4 427 192 B1**
(45) Veröffentlichungstag und Bekanntmachung des Hinweises auf die Patenterteilung: **22.04.2026**
(21) Anmeldenummer: 22812612.4
(22) Anmeldetag: 03.11.2022
(51) Int. Cl.: G06T 7/50

(54) **VORRICHTUNG UND VERFAHREN ZUR ERMITTLUNG DER ENTFERNUNG EINES LICHTSIGNALGEBERS**
DEVICE AND METHOD FOR DETERMINING THE DISTANCE OF A LIGHT SIGNAL TRANSMITTER
DISPOSITIF ET PROCÉDÉ DE DÉTERMINATION DE LA DISTANCE D'UN SIGNAL LUMINEUX

(30) Priorität: 05.11.2021 DE 102021128785
(43) Veröffentlichungstag der Anmeldung: 11.09.2024
(73) Patentinhaber: Bayerische Motoren Werke Aktiengesellschaft, 80809 München (DE)
(72) Erfinder: LANZ, Michel, 81737 München (DE); CAVETCHI, Reinhard, 85399 Hallbergmoos (DE)
(86) Internationale Anmeldenummer: PCT/EP2022/080636
(87) Internationale Veröffentlichungsnummer: WO 2023/078974

(56) Entgegenhaltungen:
- WO-A1-2011/091099
- DE-A1- 102013 001 018
- DE-A1- 102015 216 979
- DE-B3- 102013 019 550
- US-A1- 2021 261 152
- US-A1- 2021 272 306
- DABISIAS GIACOMO ET AL: "VALUE: Large Scale Voting-Based Automatic Labelling for Urban Environments", 2018 IEEE INTERNATIONAL CONFERENCE ON ROBOTICS AND AUTOMATION (ICRA), IEEE, 21 May 2018 (2018-05-21), pages 1 - 6, XP033403017, DOI: 10.1109/ICRA.2018.8460196

## Beschreibung

Die Erfindung betrifft eine Vorrichtung und ein entsprechendes Verfahren zur Ermittlung der Entfernung eines Lichtsignalgebers von einem Kraftfahrzeug.

Ein Fahrzeug kann eine oder mehrere Fahrfunktionen aufweisen, die den Fahrer des Fahrzeugs bei der Führung, insbesondere bei der Längsführung und/oder bei der Querführung, des Fahrzeugs unterstützen. Eine beispielhafte Fahrfunktion zur Unterstützung der Längsführung eines Fahrzeugs ist die Adaptive Cruise Control (ACC) Funktion, die dazu genutzt werden kann, das Fahrzeug mit einer festgelegten Setz-Fahrgeschwindigkeit und/oder in einem festgelegten Soll-Abstand zu einem vor dem Fahrzeug fahrenden Vorder-Fahrzeug längszuführen. Die Fahrfunktion kann dabei auch in Zusammenhang mit einem Lichtsignalgeber (insbesondere mit einer Ampel) an einem Verkehrs-Knotenpunkt (etwa an einer Kreuzung) genutzt werden, um eine automatisierte Längsführung, etwa eine automatisierte Verzögerung, an dem Lichtsignalgeber zu bewirken.

Im Rahmen der automatisierten Längsführung an einem Lichtsignalgeber wird typischerweise ein Schätzwert der Entfernung des Lichtsignalgebers von dem Fahrzeug ermittelt, z.B. um das Ausmaß der automatisierten Verzögerung und/oder um den Anfangszeitpunkt bzw. die Anfangsposition für die automatisierte Verzögerung festzulegen.

Aus der US 2021/261152 A1 ist ein Verfahren zum Betreiben eines Fahrzeugs bekannt, wobei mittels Kamerasysteme Lichtsignalanlagen uns weitere Objekte im Umfeld des Fahrzeugs erkannt und darauf basierend eine Fahrtrajektorie des Fahrzeugs ermittelt wird.

Aus der DE 10 2015 216 979 A1 ist ein Verfahren zum Betreiben eines Fahrerassistenzsystems an einer Kreuzungssituation bekannt, wobei mittels Umfeldsensorik ein Verkehrsszenario mit relevanten Objekten (z. B. Lichtsignalanlage) erkannt und das Fahrzeug im Verkehrsszenario lokalisiert wird.

DE 10 2013 019550 B3 beschreibt ein Verfahren zur Fahrerunterstützung bezüglich einer Ampelschaltung. DE 10 2013 001018 A1 beschreibt ein Verfahren zum Betreiben eines Fahrzeugs, bei dem der Abstand des Fahrzeugs zu einer Lichtsignalanlage ermittelt wird.

Das vorliegende Dokument befasst sich mit der technischen Aufgabe, den Schätzwert für die Entfernung eines Lichtsignalgebers einer Lichtsignalanlage in effizienter und präziser Weise zu ermitteln, insbesondere um die Güte einer Fahrfunktion zur automatisierten Längsführung an der Lichtsignalanlage zu erhöhen.

Die Aufgabe wird durch jeden einzelnen der unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird eine Vorrichtung zur Ermittlung eines Schätzwertes der Entfernung eines Lichtsignalgebers von einem Kraftfahrzeug beschrieben. Der Lichtsignalgeber kann in Fahrtrichtung vor dem Fahrzeug angeordnet sein, und das Fahrzeug kann sich mit einer bestimmten Fahrgeschwindigkeit (z.B. größer als 0 km/h, insbesondere größer als 30 km/h) auf den Lichtsignalgeber zubewegen. Der Lichtsignalgeber kann Teil einer Lichtsignalanlage sein, die ein oder mehrere Lichtsignalgeber (z.B. für ein oder mehrere unterschiedliche Fahrtrichtungen) aufweist. Der Lichtsignalgeber kann an einem Verkehrs-Knotenpunkt, insbesondere an einer Kreuzung, angeordnet sein. Ferner weist der Lichtsignalgeber typischerweise ein oder mehrere Lichtzeichen auf, die jeweils einzeln aktiviert oder deaktiviert werden können. Die unterschiedlichen Lichtzeichen können unterschiedliche Farben (etwa Rot, Gelb oder Grün) aufweisen. Der Lichtsignalgeber kann eine Ampel sein.

Die Vorrichtung ist eingerichtet, auf Basis von Bilddaten einer Kamera des Fahrzeugs eine Menge von Objekten in einem Umfeld des in Fahrtrichtung vor dem Fahrzeug angeordneten Lichtsignalgebers zu erkennen. Ferner kann auf Basis der Bilddaten auch der Lichtsignalgeber selbst erkannt werden. Die Bilddaten können eine Sequenz von zeitlich aufeinanderfolgenden Bildern umfassen. Die einzelnen Bilder können analysiert werden (z.B. anhand einer (ggf. maschinell erlernten) Bildanalyse-Methode), um ein oder mehrere Objekte im direkten Umfeld des Lichtsignalgebers zu identifizieren. Dabei kann für die einzelnen Objekte jeweils Objektinformation ermittelt werden. Die Objektinformation für ein Objekt kann z.B. umfassen: die Position des Objektes (relativ zu dem Signalgeber), die Dimensionen des Objekts (z.B. die Breite und/oder die Höhe), und/oder den Typ des Objektes.

Beispielhafte Typen von Objekten sind: eine Bodenmarkierung, insbesondere eine Haltelinie, in dem Umfeld des Signalgebers; ein Verkehrszeichen in dem Umfeld des Signalgebers; eine kreuzende Fahrspur an dem Knotenpunkt, an dem der Signalgeber angeordnet ist; ein an dem Signalgeber stehendes Fahrzeug; und/oder ein (horizontaler oder vertikaler) Mast, an dem der Signalgeber befestigt ist.

Beispielsweise kann auf Basis der Bilddaten ein Bild aus der Sequenz von Bildern ermittelt werden, das (überlagert mit dem von der Kamera erfassten Bild) eine Menge von Bounding Boxes für die entsprechende Menge von Objekten aufweist. Dabei kann ein Bounding Box jeweils ein Objekt umschließen. Ferner kann mit der Bounding Box für ein Objekt die Objektinformation für dieses Objekt assoziiert sein.

Die Vorrichtung ist ferner eingerichtet, zumindest ein Objekt aus der Menge von Objekten dem Signalgeber zuordnen. Dabei können insbesondere die ein oder mehreren Objekte aus der Menge von Objekten zugeordnet werden, die (wahrscheinlich) dem Signalgeber am nächsten sind (und somit eine ähnliche Entfernung von dem Fahrzeug aufweisen). Alternativ oder ergänzend können ein oder mehrere Objekte zugeordnet werden, die größer und/oder besser sichtbar als der Signalgeber sind.

Das zumindest eine Objekt aus der Menge von Objekten kann insbesondere anhand einer maschinell erlernten Zuordnungseinheit dem Signalgeber zuordnen. Die Zuordnungseinheit kann ein angelerntes, künstliches, neuronales Netz (insbesondere ein sogenanntes Deep Neural Network) umfassen.

Die Zuordnungseinheit kann anhand von Trainingsdaten angelernt worden sein, wobei durch die Trainingsdaten (statistisch) die Zielfunktion der Zuordnungseinheit beschrieben wird. Die Zielfunktion kann dabei darauf gerichtet sein, aus einer Menge von erkannten Objekten, die im Umfeld eines Signalgebers angeordnet sind, die N Objekte zu identifizieren, die jeweils eine Entfernung aufweisen, die der Entfernung des Signalgebers am ähnlichsten ist. N kann z.B. 1, 2, 3 oder 4 sein.

Die Trainingsdaten können eine Vielzahl von Trainings-Datensätzen aufweisen (z.B. 1000 oder mehr, oder 10000 oder mehr Datensätze). Dabei kann jeder Trainings-Datensatz jeweils Eingangsdaten (als Eingang für die Zuordnungseinheit) und Soll-Ausgangsdaten (die für die entsprechenden Eingangsdaten am Ausgang von der Zuordnungseinheit bereitgestellt werden sollten) aufweisen. Die Eingangsdaten können z.B. eine Menge von Objekten im Umfeld eines Signalgebers umfassen, die auf Basis von Bilddaten erkannt wurden. Die Soll-Ausgangsdaten können z.B. die ein oder mehreren Objekte aus der Menge von Objekten anzeigen, die für die Ermittlung der Entfernung des Signalgebers verwendet werden sollten (z.B. weil sie jeweils eine besonders ähnliche Entfernung zu der Entfernung des Signalgebers aufweisen).

Die Eingangsdaten können z.B. jeweils ein Bild einer Fahrzeug-Kamera aufweisen, wobei in dem Bild die einzelnen erkannten Objekte markiert sein können (z.B. jeweils als Bounding Boxes). Ferner kann die Objektinformation der einzelnen Objekte als Eingangsdaten an die Zuordnungseinheit übergeben werden. Als Ausgangsdaten können von der Zuordnungseinheit die ein oder mehreren Objekte aus der Menge von Objekten auf dem Bild der Fahrzeug-Kamera identifiziert werden, die dem Signalgeber zugeordnet werden. Durch die Zuordnungseinheit kann somit eine Klassifikation der Menge von erkannten Objekten bewirkt werden, in die Klassen "zugeordnet" und "nicht zugeordnet".

Die Vorrichtung ist ferner eingerichtet, (insbesondere auf Basis der Bilddaten) einen Einzel-Schätzwert der Entfernung des zumindest einen zugeordneten Objektes von dem Fahrzeug zu ermitteln. Es kann somit für jedes zugeordnete Objekt j eweils ein Einzel-Schätzwert der Entfernung des jeweiligen Objektes ermittelt werden. Dabei kann der Einzel-Schätzwert der Entfernung eines Objektes von dem Fahrzeug anhand einer Structure-from-Motion-Methode auf Basis der Bilddaten, insbesondere auf Basis der Sequenz von Bildern, ermittelt werden. Alternativ oder ergänzend kann auf Basis der Sequenz von Bildern ein optischer Fluss ermittelt werden, und der Einzel-Schätzwert der Entfernung des jeweiligen Objektes von dem Fahrzeug kann auf Basis des optischen Flusses ermittelt werden.

Es kann somit eine Bildanalyse-Methode verwendet werden, um auf Basis der Bilddaten für jedes einzelne zugeordnete Objekt jeweils einen Einzel-Schätzwert der Entfernung des zugeordneten Objektes von dem Fahrzeug zu ermitteln.

Die Vorrichtung ist ferner eingerichtet, den Schätzwert der Entfernung des Lichtsignalgebers auf Basis des Einzel-Schätzwertes der Entfernung des zumindest einen zugeordneten Objektes von dem Fahrzeug zu ermitteln.

Wie weiter oben dargelegt, ist ein zugeordnetes Objekt im direkten Umfeld des Signalgebers bevorzugt ggf. größer und/oder besser sichtbar als der Signalgeber. Als Folge daraus kann die Entfernung des zugeordneten Objektes typischerweise mit einer erhöhten Genauigkeit auf Basis der Bilddaten der Fahrzeug-Kamera ermittelt werden. Folglich kann basierend darauf die Entfernung des Signalgebers mit einer erhöhten Genauigkeit ermittelt werden.

Die Vorrichtung kann eingerichtet sein, (insbesondere auf Basis der Bilddaten) einen Einzel-Schätzwert der Entfernung des Lichtsignalgebers von dem Fahrzeug zu ermitteln. Der Einzel-Schätzwert der Entfernung des Lichtsignalgebers von dem Fahrzeug kann z.B. anhand einer Structure-from-Motion-Methode auf Basis der Bilddaten, insbesondere auf Basis der Sequenz von Bildern, ermittelt werden. Alternativ oder ergänzend kann der Einzel-Schätzwert der Entfernung des Lichtsignalgebers von dem Fahrzeug auf Basis des optischen Flusses ermittelt werden.

Der Schätzwert der Entfernung des Lichtsignalgebers kann dann auch auf Basis des Einzel-Schätzwertes der Entfernung des Lichtsignalgebers von dem Fahrzeug ermittelt werden (z.B. anhand einer Mittelungs- und/oder Fusionsmethode). So kann die Genauigkeit des Schätzwertes der Entfernung des Lichtsignalgebers weiter erhöht werden.

Es können somit Einzel-Schätzwerte der Entfernungen von ein oder mehreren Objekten im Umfeld des Signalgebers und ein Einzel-Schätzwert der Entfernung des Signalgebers ermittelt werden. Die Einzel-Schätzwerte können anhand einer (maschinell-angelernten) Fusionseinheit zu einem Schätzwert der Entfernung des Lichtsignalgebers fusioniert werden. Die Fusionseinheit kann z.B. ein angelerntes neuronales Netz umfassen. Das Anlernen kann anhand von Trainingsdaten mit einer Vielzahl von Datensätzen erfolgt sein, wobei durch die Trainingsdaten (statistisch) die Zielfunktion der Fusionseinheit beschrieben wird. Die Zielfunktion kann eine Fusion der Einzel-Schätzwerte sein, durch die sich ein besonders präziser Schätzwert der Entfernung des Lichtsignalgebers ergibt. Ein Datensatz kann als Eingangsdaten der Fusionseinheit Einzel-Schätzwerte aufweisen. Ferner kann der Datensatz als Ausgangsdaten der Fusionseinheit den Schätzwert der Entfernung des Signalgebers anzeigen, der auf Basis der Einzel-Schätzwerte der entsprechenden Eingangsdaten von der Fusionseinheit bereitgestellt werden sollte.

Die Vorrichtung kann eingerichtet sein, einen Einzel-Schätzwert der Entfernung des zugeordneten Objektes von dem Lichtsignalgeber zu ermitteln. Der Einzel-Schätzwert der Entfernung des zugeordneten Objektes von dem Lichtsignalgeber kann z.B. anhand einer Structure-from-Motion-Methode auf Basis der Bilddaten ermittelt werden. Alternativ oder ergänzend kann der Einzel-Schätzwert der Entfernung des zugeordneten Objektes von dem Lichtsignalgeber auf Basis des optischen Flusses ermittelt werden.

Der Schätzwert der Entfernung des Lichtsignalgebers kann dann auch auf Basis des Einzel-Schätzwertes der Entfernung des zugeordneten Objektes von dem Lichtsignalgeber ermittelt werden. So kann die Genauigkeit des Schätzwertes der Entfernung des Lichtsignalgebers weiter erhöht werden.

Die in oder mehreren zugeordneten Objekte können eine größere räumliche Ausbreitung aufweisen als der Lichtsignalgeber. Dies kann die Fusion mit Sensordaten von ein oder mehreren weiteren Umfeldsensoren des Fahrzeugs begünstigen, wodurch die Genauigkeit eines Einzel-Schätzwertes der Entfernung des zugeordneten Objektes und/oder die Genauigkeit des Schätzwertes der Entfernung des Lichtsignalgebers weiter erhöht werden kann.

Die Vorrichtung kann somit eingerichtet sein, anhand von ein oder mehreren weiteren Umfeldsensoren des Fahrzeugs, insbesondere anhand eines Lidarsensors und/oder anhand eines Radarsensors, Sensordaten in Bezug auf ein zugeordnetes Objekt zu ermitteln. Der Einzel-Schätzwert der Entfernung des zugeordneten Objektes von dem Fahrzeug kann dann (auch) auf Basis der Sensordaten der ein oder mehreren Umfeldsensoren ermittelt werden. Insbesondere kann eine Fusion der Sensordaten der ein oder mehreren Umfeldsensoren mit den Bilddaten erfolgen.

Die Vorrichtung kann eingerichtet sein, das Fahrzeug in Abhängigkeit von dem ermittelten Schätzwert der Entfernung des Lichtsignalgebers automatisiert längszuführen. Dabei können insbesondere der Zeitpunkt und/oder das Ausmaß einer automatisierten Verzögerung des Fahrzeugs in Abhängigkeit von dem ermittelten Schätzwert der Entfernung des Lichtsignalgebers ermittelt und/oder bewirkt werden. Durch die erhöhte Genauigkeit des Schätzwertes kann die Güte der automatisierten Längsführung erhöht werden.

Des Weiteren kann die Vorrichtung eingerichtet sein, (insbesondere auf Basis der Bilddaten) den Signalisierungszustand des Lichtsignalgebers (z.B. Rot oder Grün) zu ermitteln. Das Fahrzeug kann dann in Abhängigkeit von dem Signalisierungszustand automatisiert verzögert werden (z.B. bei Rot), um das Fahrzeug vor dem Lichtsignalgeber in den Stillstand zu überführen. Andererseits kann das Fahrzeug (z.B. bei Grün) automatisiert an dem Lichtsignalgeber vorbeigeführt werden. Durch die Berücksichtigung des Signalisierungszustands des Signalgebers kann die Güte der automatisierten Längsführung weiter erhöht werden.

Gemäß einem weiteren Aspekt wird ein (Straßen-) Kraftfahrzeug (insbesondere ein Personenkraftwagen oder ein Lastkraftwagen oder ein Bus oder ein Motorrad) beschrieben, das die in diesem Dokument beschriebene Vorrichtung umfasst.

Gemäß einem weiteren Aspekt wird ein Verfahren zur Ermittlung eines Schätzwertes der Entfernung eines Lichtsignalgebers von einem Kraftfahrzeug beschrieben. Das Verfahren umfasst das Erkennen, auf Basis von Bilddaten einer Kamera des Fahrzeugs, einer Menge von Objekten in einem Umfeld des in Fahrtrichtung vor dem Fahrzeug angeordneten Lichtsignalgebers, sowie das Zuordnen zumindest eines Objektes aus der Menge von Objekten zu dem Signalgeber. Außerdem umfasst das Verfahren das Ermitteln, insbesondere auf Basis der Bilddaten, eines Einzel-Schätzwertes der Entfernung des zugeordneten Objektes von dem Fahrzeug. Das Verfahren umfasst ferner das Ermitteln des Schätzwertes der Entfernung des Lichtsignalgebers auf Basis des Einzel-Schätzwertes der Entfernung des zugeordneten Objektes von dem Fahrzeug.

Gemäß einem weiteren Aspekt wird ein Software (SW) Programm beschrieben. Das SW Programm kann eingerichtet sein, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden. Ferner sind in Klammern aufgeführte Merkmale als optionale Merkmale zu verstehen.

Im Weiteren wird die Erfindung anhand von Ausführungsbeispielen näher beschrieben. Dabei zeigen
Figur 1 beispielhafte Komponenten eines Fahrzeugs;
Figur 2 eine beispielhafte Lichtsignalanlage;
Figur 3 eine beispielhafte Verkehrssituation;
Figur 4 einen beispielhaften Knotenpunkt; und
Figur 5 ein Ablaufdiagramm eines beispielhaften Verfahrens zur Ermittlung eines Schätzwertes der Entfernung einer Lichtsignalanlage.

Wie eingangs dargelegt, befasst sich das vorliegende Dokument damit, die Entfernung einer Lichtsignalanlage, die in Fahrtrichtung vor einem Fahrzeug angeordnet ist, in effizienter und präziser Weise zu ermitteln. Die Entfernung soll dabei bevorzugt allein auf Basis der Bilddaten einer Kamera des Fahrzeugs ermittelt werden. Die in diesem Dokument beschriebenen Entfernungen können sich auf eine Entfernung entlang der Fahrtrichtung des Fahrzeugs beziehen. Alternativ oder ergänzend können sich die Entfernungen zwischen zwei Entitäten auf die jeweils kürzeste Entfernung zwischen den beiden Entitäten beziehen.

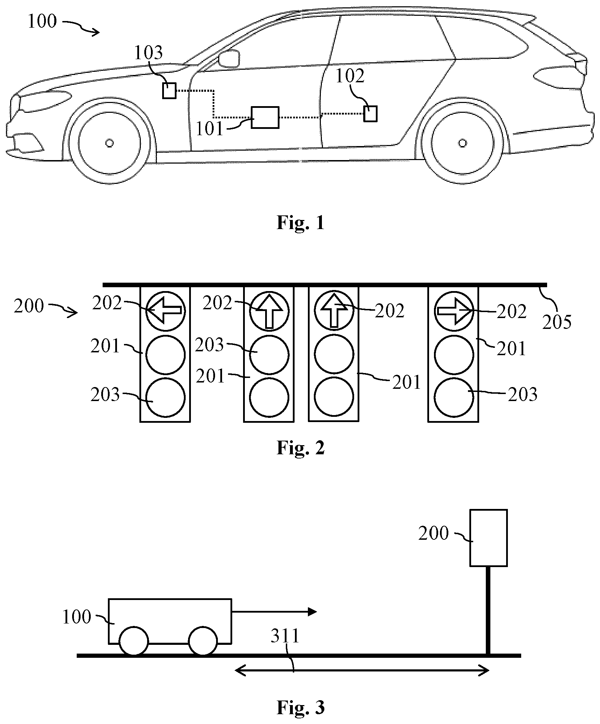

Fig. 1 zeigt beispielhafte Komponenten eines Fahrzeugs 100. Das Fahrzeug 100 umfasst ein oder mehrere Umfeldsensoren 103 (z.B. ein oder mehrere Bildkameras, ein oder mehrere Radarsensoren, ein oder mehrere Lidarsensoren, ein oder mehrere Ultraschallsensoren, etc.), die eingerichtet sind, Umfelddaten in Bezug auf das Umfeld des Fahrzeugs 100 (insbesondere in Bezug auf das Umfeld in Fahrtrichtung vor dem Fahrzeug 100) zu erfassen. Des Weiteren umfasst das Fahrzeug 100 ein oder mehrere Aktoren 102, die eingerichtet sind, auf die Längs- und/oder die Querführung des Fahrzeugs 100 einzuwirken. Beispielhafte Aktoren 102 sind: eine Bremsanlage, ein Antriebsmotor, eine Lenkung, etc.

Die (Steuer-) Vorrichtung 101 des Fahrzeugs 100 kann eingerichtet sein, auf Basis der Sensordaten der ein oder mehreren Umfeldsensoren 103 (d.h. auf Basis der Umfelddaten) eine Fahrfunktion, insbesondere eine Fahrerassistenzfunktion, bereitzustellen. Beispielweise kann auf Basis der Sensordaten ein Hindernis auf der Fahrtrajektorie des Fahrzeugs 100 erkannt werden. Die Steuereinheit 101 kann daraufhin ein oder mehrere Aktoren 102 (z.B. die Bremsanlage) ansteuern, um das Fahrzeug 100 automatisiert zu verzögern und dadurch eine Kollision des Fahrzeugs 100 mit dem Hindernis zu verhindern.

Insbesondere im Rahmen der automatisierten Längsführung eines Fahrzeugs 100 können neben einem Vorder-Fahrzeug ein oder mehrere Lichtsignalanlagen auf der von dem Fahrzeug 100 befahrenen Fahrbahn bzw. Straße berücksichtigt werden. Dabei kann insbesondere der Status einer Lichtsignal- bzw. Ampelanlage berücksichtigt werden, sodass das Fahrzeug 100 automatisiert an einer für die eigene (geplante) Fahrtrichtung relevanten roten Ampel eine Verzögerung bis zu der Haltelinie der Ampel bewirkt und/oder bei einer grünen Ampel (ggf. wieder) beschleunigt.

Fig. 2 zeigt eine beispielhafte Lichtsignalanlage 200. Die in Fig. 2 dargestellte Lichtsignalanlage 200 weist vier unterschiedliche Signalgeber 201 auf, die an unterschiedlichen Positionen an einer Zufahrt zu einer Kreuzung angeordnet sind. Der linke Signalgeber 201 weist einen Pfeil 202 nach links auf, und zeigt damit an, dass dieser Signalgeber 201 für Linksabbieger gilt. Die beiden mittleren Signalgeber 201 weisen einen Pfeil 202 nach oben (oder keinen Pfeil 202) auf und zeigen damit an, dass diese beiden Signalgeber 201 für eine Geradeausfahrt gelten. Die einzelnen Lichtzeichen 203 dieser beiden Signalgeber 201 bilden Signalgruppen. Des Weiteren weist der rechte Signalgeber 201 einen Pfeil 202 nach rechts auf, und zeigt damit an, dass dieser Signalgeber 201 für Rechtsabbieger gilt.

Fig. 3 zeigt beispielhaft ein Fahrzeug 100, das sich auf einer Fahrbahn auf eine Lichtsignalanlage 200 zubewegt. Die ein oder mehreren Umfeldsensoren 103 des Fahrzeugs 100 können eingerichtet sein, Sensordaten (insbesondere Bilddaten) in Bezug auf die Lichtsignalanlage 200 zu erfassen. Die Sensordaten können dann analysiert werden (z.B. mittels eines Bildanalysealgorithmus), um Ausprägungen von ein oder mehreren Merkmalen der Lichtsignalanlage 200 zu ermitteln. Insbesondere kann auf Basis der Sensordaten ermittelt werden, welcher Signalgeber 201 der Lichtsignalanlage 200 für die (geplante) Fahrtrichtung des Fahrzeugs 100 relevant ist. Des Weiteren kann der (Signalisierungs-) Zustand des relevanten Signalgebers 201 (z.B. die Farbe, etwa Rot, Gelb oder Grün) ermittelt werden. Außerdem kann die Entfernung 311 der Lichtsignalanlage 200 von dem Fahrzeug 100 ermittelt werden.

Die Erkennung, die Klassifikation und/oder die Positionierung von Lichtsignalgebern 201 können auf Basis der Bilddaten einer Kamera 103 erfolgen. Dabei können Methoden verwendet werden, die auf "Structure from Motion" und/oder auf der Auswertung des optischen Flusses in einer Sequenz von Bildern basieren. Ferner kann die Nachverfolgung eines erkannten Lichtsignalgebers 201 über der Zeit anhand eines Kalman Filters erfolgen. Zur Ermittlung eines Absolutwertes der Entfernung 311 können Heuristiken in Bezug auf die typische Größe von Lichtsignalgebern 291 (z.B. eine typische Höhe und/oder Breite) verwendet werden. Bei einem Stereokamerasystem können zusätzlich die Parallaxe zwischen den beiden Kameras des Stereokamerasystems für eine (skalierte) Entfernungsschätzung verwendet werden.

Der anhand der o.g. Methoden ermittelte Schätzwert der Entfernung 311 einer Lichtsignalanlage 200 kann insbesondere bei einer relativ hohen Entfernung 311 (z.B. bei 80 Meter oder mehr) und/oder bei einer relativ hohen Fahrgeschwindigkeit (z.B. bei 70 km/h) eine relativ hohe Ungenauigkeit aufweisen. Die Ungenauigkeit kann ggf. derart hoch sein, dass eine auf Basis der Bilddaten erkannte Lichtsignalanlage 200 nicht eindeutig einer in einer digitalen Karte kartierten Lichtsignalanlage zugeordnet werden kann oder fehlerhaft einer kartierten Lichtsignalanlage zugeordnet wird. Darüber hinaus ist bei einer relativ hohen Fahrgeschwindigkeit typischerweise eine relativ hohe Erkennungsreichweite eines Signalgebers 201 erforderlich (z.B. bis zu 250 Meter), um eine komfortable und/oder zuverlässige Berücksichtigung des Signalgebers 201 bei der automatisierten Längsführung zu ermöglichen. Als Folge daraus kann die Güte einer automatisierten Fahrfunktion des Fahrzeugs 100 beeinträchtigt werden.

Beispielhafte Ursachen für die Ungenauigkeit eines ermittelten Entfernungs-Schätzwertes können sein,
- eine relativ geringe Auflösung und/oder eine relativ geringe Anzahl von Bildpunkten eines Lichtzeichens 203 eines Lichtsignalgebers 201 bei relativ großen Entfernungen 311. Dies kann dazu führen, dass eine Abweichung der Bildauswertung um nur einen Bildpunkt zu einer relativ starken Auswirkung bei der Entfernungsschätzung führt.
- ein relativ geringer optischer Fluss, insbesondere wenn sich der Lichtsignalgeber 201 im Mittelpunkt des von einer Kamera 103 erfassten Bildes befindet.
- eine fehlerhafte Annahme in Bezug auf die Größe eines Lichtsignalgebers 201.
- ein Lichtsignalgeber 201 ist häufig vor dem Himmel als Hintergrund angeordnet, sodass in dem Bildbereich des Lichtsignalgebers 201 nur relativ wenige Referenzpunkte angeordnet sind.
- eine fehlerhafte Annahme in Bezug auf die Größe eines Lichtsignalgebers 201 aufgrund von Effekten wie Lichtschwertern und/oder Blur (bei einer nassen Windschutzscheibe, bei Dämmerung oder bei Nacht).
- bei einer Situation mit wenig Umgebungslicht kann ggf. nur das aktive Lichtzeichen 203 erkannt werden, und nicht mehr der gesamte Lichtsignalgeber 201. Als Folge daraus wird die verfügbare Anzahl von Bildpunkten des Lichtsignalgebers 201 weiter reduziert.

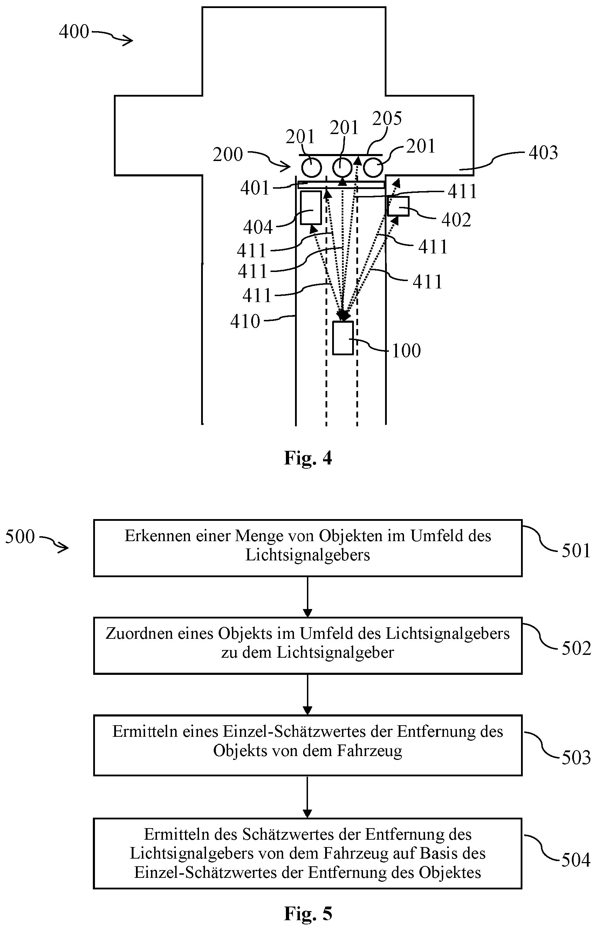

Fig. 4 zeigt einen beispielhaften Knotenpunkt 400 mit einer Lichtsignalanlage 200. Die Lichtsignalanlage 200 kann dabei mehrere Signalgeber 201 mit jeweils ein oder mehreren Lichtzeichen 203 umfassen, die ggf. unterschiedlichen Fahrtrichtungen zugeordnet sind. Das Fahrzeug 100 ist auf einer Zufahrt 410 zu dem Knotenpunkt 400 angeordnet, und kann eingerichtet sein, Umfelddaten in Bezug auf das Umfeld des Fahrzeugs 100 zu erfassen. Die Umfelddaten (insbesondere die Bilddaten einer Kamera) können dabei die Lichtsignalanlage 200 (insbesondere die ein oder mehreren Signalgeber 201 und/oder die ein oder mehreren Lichtzeichen 203 der Lichtsignalanlage 200) an der Zufahrt 410 zu dem Knotenpunkt 400, insbesondere zu der Kreuzung, anzeigen. Des Weiteren können von den ein oder mehreren Umfeldsensoren 103 des Fahrzeugs 100 ein oder mehrere weitere Objekte 401, 402, 403, 404, 205 (insbesondere ein oder mehrere Landmarken) im Umfeld des Fahrzeugs 100, insbesondere an dem Knotenpunkt 400, angezeigt werden. Beispielhafte Objekte sind
- eine Haltelinie 401 an der Lichtsignalanlage 200;
- ein Verkehrszeichen 402 in der Umgebung der Lichtsignalanlage 200;
- ein Mast 205, an dem die ein oder mehreren Signalgeber 201 der Lichtsignalanlage 200 befestigt sein; wobei der Mast 205 vertikal oder horizontal angeordnet sein kann;
- eine die Zufahrt 410 kreuzende Fahrspur 403; und/oder
- ein an der Lichtsignalanlage 200 stehendes Fahrzeug 404.

Die (Steuer-) Vorrichtung 101 kann eingerichtet sein, ein oder mehrere der auf Basis der Umfelddaten (insbesondere auf Basis der Bilddaten) erkannten Objekte 401, 402, 403, 404, 205 der Lichtsignalanlage 200, insbesondere dem Lichtsignalgeber 201, zuzuordnen, für den ein Schätzwert der Entfernung 311 ermittelt werden soll. Dabei können insbesondere die ein oder mehreren Objekte zugeordnet werden, die mit einer relativ hohen Wahrscheinlichkeit in unmittelbarer Nähe zu der Lichtsignalanlage 200 angeordnet sind und/oder die mit einer relativ hohen Wahrscheinlichkeit eine ähnlich weite Entfernung 411 zu dem Fahrzeug 100 aufweisen.

Die Zuordnung von ein oder mehreren der erkannten Objekte 401, 402, 403, 404, 205 zu der Lichtsignalanlage 200 kann anhand einer maschinell angelernten Zuordnungseinheit bewirkt werden. Die Zuordnungseinheit kann z.B. ein angelerntes, künstliches neuronales Netz (insbesondere ein Deep Neural Network) umfassen.

Zum Anlernen der Zuordnungseinheit können Trainingsdaten mit einer Vielzahl von Trainings-Datensätzen verwendet werden. Ein Trainings-Datensatz kann als Eingangsdaten eine Liste von Objekten 401, 402, 403, 404, 205 im Umfeld einer Lichtsignalanlage 200 aufweisen. Ferner kann der Trainings-Datensatz als Soll-Ausgangsdaten für die Zuordnungseinheit eine Klassifizierung dahingehend aufweisen, welche der Objekte aus der Liste von Objekten 401, 402, 403, 404, 205 der Lichtsignalanlage 200 zugeordnet werden sollten.

Die Zuordnungseinheit kann anhand eines Lern-Algorithmus (z.B. anhand eines Backpropagation-Algorithmus) angelernt werden, um zu bewirken, dass die Zuordnungseinheit das durch die Trainingsdaten beschriebene Klassifizierungs-Verhalten aufweist.

Ggf. kann ein Bild der Umfeldkamera 103 als Eingangsdaten an die Zuordnungseinheit übergeben werden, wobei in dem Bild die ein oder mehreren erkannten Objekte 401, 402, 403, 404, 205 im Umfeld einer Lichtsignalanlage 200 gekennzeichnet sind (z.B. jeweils als eine Bounding Box). Die Zuordnung der ein oder mehreren Objekte kann dann als Ausgangsdaten bereitgestellt werden.

Die (Steuer-) Vorrichtung 101 kann ferner eingerichtet sein, Objekt-Entfernungsinformation für jedes der ein oder mehreren Objekte 401, 402, 403, 404, 205 zu ermitteln, die einer erkannten Lichtsignalanlage 200 zugeordnet wurden. Dabei kann die Objekt-Entfernungsinformation für ein Objekt 401 einen (Einzel-) Schätzwert der Entfernung 411 des Objektes 401 von dem Fahrzeug 100 aufweisen. Der (Einzel-) Schätzwert der Entfernung 411 kann auf Basis der Umfelddaten, insbesondere auf Basis der Bilddaten, ermittelt werden. Dabei können die o.g. Methoden verwendet werden, die auf einer Structure-from-Motion Analyse und/oder auf einer Analyse des optischen Flusses basieren. Alternativ oder ergänzend können Umfelddaten von ein oder mehreren weiteren Umfeldsensoren 103 verwendet werden (wie z.B. einem Lidarsensor und/oder einem Radarsensor). Es kann somit eine Fusion mit Sensordaten von ein oder mehreren weiteren Umfeldsensoren 103 erfolgen (was insbesondere bei einem relativ großen Objekt 401 möglich ist, und somit eine besonders präzise Entfernungsschätzung ermöglicht).

Es können somit (zusätzlich zu einem individuell ermittelten (Einzel-) Schätzwert der Entfernung 411 des Signalgebers 201) ein oder mehrere individuell ermittelte (Einzel-) Schätzwerte der Entfernungen 411 von ein oder mehreren (dem Signalgeber 201 zugeordneten) Objekten 401, 402, 403, 404, 205 ermittelt werden. Basierend auf der Mehrzahl von individuell ermittelten Einzel-Schätzwerten der Entfernungen 411 kann dann mit erhöhter Genauigkeit der Gesamt-Schätzwert der Entfernung 311 des Signalgebers 201 bzw. der Signalanlage 200 ermittelt werden. Zu diesem Zweck kann z.B. eine (gewichtete) Mittelwertbildung der Einzel-Schätzwerte der Entfernungen 411 erfolgen. Alternativ oder ergänzend kann eine (maschinell-angelernte) Fusionseinheit verwendet werden, um auf Basis der Einzel-Schätzwerte der Entfernungen 411 den Gesamt-Schätzwert der Entfernung 311 zu ermitteln.

Es kann somit eine kontextbasierte Erkennung und Zuordnung von Objekten (insbesondere von Landmarken) zu einer Kreuzungsszene durchgeführt werden. Zu diesem Zweck kann ein Deep Learning Verfahren verwendet werden. Es können dabei einem detektieren und als Kreuzung 400 klassifizierten Ort Objekte inklusive ein oder mehrerer Lichtsignalanlagen 200 zugeordnet werden.

Basierend auf den zugeordneten Objekten kann eine Fusion von Distanzmessungen durchgeführt werden. Die Entfernungsschätzung kann somit um zusätzliche Referenzmessungen (zwischen Fahrzeug 100 und Objekt, und zwischen Objekt und Lichtsignalanlage 200) ergänzt werden. Durch die Berücksichtigung von relativ großen Objekten (mit einer erhöhten Anzahl von Bildpunkten) und/oder durch die Berücksichtigung ein oder mehrerer weiterer benachbarter Lichtsignalgeber 200 kann die Genauigkeit des Schätzwertes der Entfernung 311 eines Lichtsignalgebers 200 erhöht werden. Die Berücksichtigung eines relativ großen Objektes, das ggf. am Rand eines Bildes angeordnet ist, ermöglicht die Verwendung eines relativ großen optischen Flusses für die Ermittlung des Entfernungs-Schätzwertes, was wiederum eine beschleunigte Konvergenz des Kalman Filters ermöglicht. Beispielhafte Objekte, die berücksichtigt werden können, sind: Verkehrsschilder 402 (z.B. Stoppschild, Vorfahrtsschild) und/oder Richtungsweiser; horizontale und vertikale Masten 205; eine andere Lichtsignalanlage und/oder ein anderer Lichtsignalgeber 201 an dem Verkehrs-Knotenpunkt 400; eine Bodenmarkierung (z.B. Haltelinie 401); ein stehendes Fahrzeug 404; eine kreuzende Fahrspur 403; etc.

Fig. 5 zeigt ein Ablaufdiagramm eines beispielhaften (ggf. Computerimplementierten) Verfahrens 500 zur Ermittlung eines Schätzwertes der Entfernung 311 eines Lichtsignalgebers 201 von einem Kraftfahrzeug 100. Der Lichtsignalgeber 201 kann Teil einer Lichtsignalanlage 200 mit ein oder mehreren Lichtsignalgebern 201 sein. Der Lichtsignalgeber 201 kann ein oder mehrere Lichtzeichen 203 aufweisen, die jeweils einzeln aktiviert werden können (sodass Licht emittiert wird) oder deaktiviert werden können (sodass kein Licht emittiert wird).

Das Verfahren 500 umfasst das Erkennen 501, auf Basis von Bilddaten (zumindest) einer Kamera 103 des Fahrzeugs 100, einer Menge von Objekten 401, 402, 403, 404, 205 in einem Umfeld des in Fahrtrichtung vor dem Fahrzeug 100 angeordneten Lichtsignalgebers 201. Zu diesem Zweck kann ein Objekterkennungsalgorithmus angewendet werden, der ausgebildet ist, die Bilddaten (die z.B. eine zeitliche Sequenz von Bildern aufweisen) zu analysieren, um Objekte zu erkennen. Dabei kann für ein Objekt jeweils Objektinformation ermittelt werden. Beispielhafte Objektinformation umfasst die Position des Objektes, die Größe des Objekts und/oder den Typ des Objektes.

Das Verfahren 500 umfasst ferner das Zuordnen 502 zumindest eines Objektes 401 aus der Menge von Objekten 401, 402, 403, 404, 205 zu dem Signalgeber 201. Das Zuordnen 502 kann auf Basis der Bilddaten und/oder auf Basis der Objektinformation in Bezug auf die einzelnen Objekte 401, 402, 403, 404, 205 durchgeführt werden. Das Zuordnen 502 kann insbesondere derart erfolgen, dass (ggf. nur) ein oder mehrere Objekte 401 zugeordnet werden, die mit einer relativ hohen Wahrscheinlichkeit (z.B. von 50% oder mehr) eine Entfernung 411 von dem Fahrzeug 100 aufweisen, die um weniger als einen bestimmten Wert (z.B. um 10% oder weniger) von der zu ermittelnden Entfernung 311 des (Licht-) Signalgebers 201 abweicht.

Im Rahmen des Zuordnens 502 können somit die ein oder mehreren Objekte 401 aus der Menge von Objekten 401, 402, 403, 404, 205 identifiziert werden, die ungefähr die gleiche Entfernung 411 von dem Fahrzeug 100 aufweisen wie der Signalgeber 201. Das Zuordnen 502 kann dabei anhand einer maschinell erlernten Zuordnungseinheit durchgeführt werden.

Das Verfahren 500 umfasst ferner das Ermitteln 503, insbesondere auf Basis der Bilddaten, eines Einzel-Schätzwertes der Entfernung 411 des zugeordneten Objektes 401 von dem Fahrzeug 100. Die Entfernungsschätzung kann anhand des optischen Flusses in der zeitlichen Sequenz von Bildern und/oder anhand einer Structure-from-Motion-Methode durchgeführt werden. Alternativ oder ergänzend kann die Entfernungsschätzung auf Basis von Sensordaten von ein oder mehreren weiteren Umfeldsensoren 103 des Fahrzeugs 100 durchgeführt werden. Insbesondere kann eine Fusion mit Sensordaten eines Lidar- und/oder Radarsensors erfolgen.

Des Weiteren umfasst das Verfahren 500 das Ermitteln 504 des Schätzwertes der Entfernung 311 des Lichtsignalgebers 201 auf Basis des Einzel-Schätzwertes der Entfernung 411 des zugeordneten Objektes 401 von dem Fahrzeug 100.

Durch die in diesem Dokument beschriebenen Maßnahmen kann die Entfernung eines vorausliegenden Signalgebers 201 in effizienter und präziser Weise ermittelt werden. Dies ermöglicht es, eine besonders zuverlässige und robuste Fahrfunktion, insbesondere eine Fahrfunktion zur automatisierten Längsführung, an einem Verkehrs-Knotenpunkt 400 bereitzustellen.

## Patentansprüche

1. Vorrichtung (101) zur Ermittlung eines Schätzwertes der Entfernung (311) eines Lichtsignalgebers (201) von einem Kraftfahrzeug (100); wobei die Vorrichtung (101) eingerichtet ist,
- auf Basis von Bilddaten einer Kamera (103) des Fahrzeugs (100) eine Menge von Objekten (401, 402, 403, 404, 205) in einem Umfeld des in Fahrtrichtung vor dem Fahrzeug (100) angeordneten Lichtsignalgebers (201) zu erkennen;
- zumindest ein Objekt (401) aus der Menge von Objekten (401, 402, 403, 404, 205) dem Signalgeber (201) zuordnen;
- einen Einzel-Schätzwert der Entfernung (411) des zugeordneten Objektes (401) von dem Fahrzeug (100) zu ermitteln;
- auf Basis der Bilddaten einen Einzel-Schätzwert der Entfernung (411) des Lichtsignalgebers (201) von dem Fahrzeug (100) zu ermitteln; und
- den Schätzwert der Entfernung (311) des Lichtsignalgebers (201) auf Basis des Einzel-Schätzwertes der Entfernung (411) des zugeordneten Objektes (401) von dem Fahrzeug (100) und auf Basis des Einzel-Schätzwertes der Entfernung (411) des Lichtsignalgebers (201) von dem Fahrzeug (100) zu ermitteln; wobei der Einzel-Schätzwert der Entfernung (411) des zugeordneten Objektes (401) von dem Fahrzeug (100) und der Einzel-Schätzwert der Entfernung (411) des Lichtsignalgebers (201) von dem Fahrzeug (100) durch eine maschinell-angelernte Fusionseinheit zu dem Schätzwert der Entfernung (311) des Lichtsignalgebers (201) fusioniert werden.

2. Vorrichtung (101) gemäß Anspruch 1, wobei
- die Vorrichtung (101) eingerichtet ist, das zumindest eine Objekt (401) aus der Menge von Objekten (401, 402, 403, 404, 205) anhand einer maschinell erlernten Zuordnungseinheit dem Signalgeber (201) zuordnen; und
- die Zuordnungseinheit insbesondere ein angelerntes, künstliches, neuronales Netz umfasst.

3. Vorrichtung (101) gemäß einem der vorhergehenden Ansprüche, wobei die Vorrichtung (101) eingerichtet ist, den Einzel-Schätzwert der Entfernung (411) des zugeordneten Objektes (401) von dem Fahrzeug (100) anhand einer Structure-from-Motion-Methode auf Basis der Bilddaten zu ermitteln.

4. Vorrichtung (101) gemäß einem der vorhergehenden Ansprüche, wobei die Vorrichtung (101) eingerichtet ist,
- anhand von ein oder mehreren Umfeldsensoren (103) des Fahrzeugs (100), insbesondere anhand eines Lidarsensors und/oder anhand eines Radarsensors, Sensordaten in Bezug auf das zugeordnete Objekt (401) zu ermitteln; und
- den Einzel-Schätzwert der Entfernung (411) des zugeordneten Objektes (401) von dem Fahrzeug (100) auf Basis der Sensordaten der ein oder mehreren Umfeldsensoren (103) zu ermitteln.

5. Vorrichtung (101) gemäß einem der vorhergehenden Ansprüche, wobei
- die Bilddaten eine Sequenz von zeitlich aufeinanderfolgenden Bildern umfasst; und
- die Vorrichtung (101) eingerichtet ist,
- auf Basis der Sequenz von Bildern einen optischen Fluss zu ermitteln; und
- den Einzel-Schätzwert der Entfernung (411) des zugeordneten Objektes (401) von dem Fahrzeug (100) auf Basis des optischen Flusses zu ermitteln.

6. Vorrichtung (101) gemäß einem der vorhergehenden Ansprüche, wobei die Vorrichtung (101) eingerichtet ist,
- einen Einzel-Schätzwert der Entfernung des zugeordneten Objektes (401) von dem Lichtsignalgeber (201) zu ermitteln; und
- den Schätzwert der Entfernung (311) des Lichtsignalgebers (201) auch auf Basis des Einzel-Schätzwertes der Entfernung des zugeordneten Objektes (401) von dem Lichtsignalgeber (201) zu ermitteln.

7. Vorrichtung (101) gemäß einem der vorhergehenden Ansprüche, wobei die Vorrichtung (101) eingerichtet ist, das Fahrzeug (100) in Abhängigkeit von dem ermittelten Schätzwert der Entfernung (311) des Lichtsignalgebers (201) automatisiert längszuführen.

8. Vorrichtung (101) gemäß Anspruch 7, wobei die Vorrichtung (101) eingerichtet ist,
- auf Basis der Bilddaten einen Signalisierungszustand des Lichtsignalgebers (201) zu ermitteln; und
- das Fahrzeug (100) in Abhängigkeit von dem Signalisierungszustand automatisiert zu verzögern, um das Fahrzeug (100) vor dem Lichtsignalgeber (201) in den Stillstand zu überführen, oder automatisiert an dem Lichtsignalgeber (201) vorbeizuführen.

9. Vorrichtung (101) gemäß einem der vorhergehenden Ansprüche, wobei die Menge von Objekten (401, 402, 403, 404, 205) ein oder mehrere umfasst, von
- eine Bodenmarkierung, insbesondere eine Haltelinie (401), in dem Umfeld des Signalgebers (201);
- ein Verkehrszeichen (402) in dem Umfeld des Signalgebers (201);
- eine kreuzende Fahrspur (403) an einem Knotenpunkt (400), an dem der Signalgeber (201) angeordnet ist;
- ein an dem Signalgeber (201) stehendes Fahrzeug (404); und/oder
- ein Mast (205), an dem der Signalgeber (201) befestigt ist.

10. Verfahren (500) zur Ermittlung eines Schätzwertes der Entfernung (311) eines Lichtsignalgebers (201) von einem Kraftfahrzeug (100); wobei das Verfahren (500) umfasst,
- Erkennen (501), auf Basis von Bilddaten einer Kamera (103) des Fahrzeugs (100), einer Menge von Objekten (401, 402, 403, 404, 205) in einem Umfeld des in Fahrtrichtung vor dem Fahrzeug (100) angeordneten Lichtsignalgebers (201);
- Zuordnen (502) zumindest eines Objektes (401) aus der Menge von Objekten (401, 402, 403, 404, 205) zu dem Signalgeber (201);
- Ermitteln (503), insbesondere auf Basis der Bilddaten, eines Einzel-Schätzwertes der Entfernung (411) des zugeordneten Objektes (401) von dem Fahrzeug (100);
- Ermitteln, auf Basis der Bilddaten, eines Einzel-Schätzwertes der Entfernung (411) des Lichtsignalgebers (201) von dem Fahrzeug (100); und
- Ermitteln (504) des Schätzwertes der Entfernung (311) des Lichtsignalgebers (201) auf Basis des Einzel-Schätzwertes der Entfernung (411) des zugeordneten Objektes (401) von dem Fahrzeug (100) und auf Basis des Einzel-Schätzwertes der Entfernung (411) des Lichtsignalgebers (201) von dem Fahrzeug (100); wobei der Einzel-Schätzwert der Entfernung (411) des zugeordneten Objektes (401) von dem Fahrzeug (100) und der Einzel-Schätzwert der Entfernung (411) des Lichtsignalgebers (201) von dem Fahrzeug (100) durch eine maschinell-angelernte Fusionseinheit zu dem Schätzwert der Entfernung (311) des Lichtsignalgebers (201) fusioniert werden.

## Claims

1. A device (101) for determining an estimated value of the distance (311) of a light signal transmitter (201) from a motor vehicle (100); wherein the device (101) is configured to,
• recognize a set of objects (401, 402, 403, 404, 205) in a surrounding area of the light signal transmitter (201) arranged in the direction of travel in front of the vehicle (100);
• assign at least one object (401) from the set of objects (401, 402, 403, 404, 205) to the signal transmitter (201);
• determine an individual estimated value of the distance (411) of the assigned object (401) from the vehicle (100);
• determine, on the basis of the image data, an individual estimated value of the distance (411) of the light signal transmitter (201) from the vehicle (100); and
• determine the estimated value of the distance (311) of the light signal transmitter (201) on the basis of the individual estimated value of the distance (411) of the assigned object (401) from the vehicle (100) and on the basis of the individual estimated value of the distance (411) of the light signal transmitter (201) from the vehicle (100); wherein the individual estimated value of the distance (411) of the assigned object (401) from the vehicle (100) and the individual estimated value of the distance (411) of the light signal transmitter (201) from the vehicle (100) are fused by a machine-learned fusion unit to form the estimated value of the distance (311) of the light signal transmitter (201).

2. The device (101) according to claim 1, wherein
• the device (101) is configured to assign the at least one object (401) from the set of objects (401, 402, 403, 404, 205) to the signal transmitter (201) by means of a machine-learned assignment unit; and
• the assignment unit in particular comprises a trained artificial neural network.

3. The device (101) according to any one of the preceding claims, wherein the device (101) is configured to determine the individual estimated value of the distance (411) of the assigned object (401) from the vehicle (100) by means of a structure-from-motion method on the basis of the image data.

4. **The device** (101) according to any one of the preceding claims, wherein the device (101) is configured to,
• determine sensor data with respect to the assigned object (401) by means of one or more environment sensors (103) of the vehicle (100), in particular by means of a lidar sensor and/or by means of a radar sensor; and
• determine the individual estimated value of the distance (411) of the assigned object (401) from the vehicle (100) on the basis of the sensor data of the one or more environment sensors (103).

5. The device (101) according to any one of the preceding claims, wherein
• the image data comprise a sequence of temporally consecutive images; and
• the device (101) is configured to,
∘ determine an optical flow on the basis of the sequence of images; and
∘ determine the individual estimated value of the distance (411) of the assigned object (401) from the vehicle (100) on the basis of the optical flow.

6. The device (101) according to one of the preceding claims, wherein the device (101) is configured to,
• determine an individual estimated value of the distance of the assigned object (401) from the light signal transmitter (201); and
• determine the estimated value of the distance (311) of the light signal transmitter (201) also on the basis of the individual estimated value of the distance of the assigned object (401) from the light signal transmitter (201).

7. The device (101) according to any one of the preceding claims, wherein the device (101) is configured to guide the vehicle (100) automatically in a longitudinal direction in dependence on the determined estimated value of the distance (311) of the light signal transmitter (201).

8. The device (101) according to claim 7, wherein the device (101) is configured to,
• determine a signaling state of the light signal transmitter (201) on the basis of the image data; and
• decelerate the vehicle (100) automatically in dependence on the signaling state in order to bring the vehicle (100) to a standstill in front of the light signal transmitter (201), or to guide it automatically past the light signal transmitter (201).

9. The device (101) according to any one of the preceding claims, wherein the set of objects (401, 402, 403, 404, 205) comprises one or more of,
• a ground marking, in particular a stop line (401), in the surrounding area of the signal transmitter (201);
• a traffic sign (402) in the surrounding area of the signal transmitter (201);
• a crossing lane (403) at a junction (400) at which the signal transmitter (201) is arranged;
• a vehicle (404) standing at the signal transmitter (201); and/or
• a pole (205) to which the signal transmitter (201) is attached.

10. A method (500) for determining an estimated value of the distance (311) of a light signal transmitter (201) from a motor vehicle (100); wherein the method (500) comprises,
• recognizing (501), on the basis of image data of a camera (103) of the vehicle (100), a set of objects (401, 402, 403, 404, 205) in a surrounding area of the light signal transmitter (201) arranged in the direction of travel in front of the vehicle (100);
• assigning (502) at least one object (401) from the set of objects (401, 402, 403, 404, 205) to the signal transmitter (201);
• determining (503), in particular on the basis of the image data, an individual estimated value of the distance (411) of the assigned object (401) from the vehicle (100);
• determining, on the basis of the image data, an individual estimated value of the distance (411) of the light signal transmitter (201) from the vehicle (100); and
• determining (504) the estimated value of the distance (311) of the light signal transmitter (201) on the basis of the individual estimated value of the distance (411) of the assigned object (401) from the vehicle (100) and on the basis of the individual estimated value of the distance (411) of the light signal transmitter (201) from the vehicle (100); wherein the individual estimated value of the distance (411) of the assigned object (401) from the vehicle (100) and the individual estimated value of the distance (411) of the light signal transmitter (201) from the vehicle (100) are fused by a machine-learned fusion unit to form the estimated value of the distance (311) of the light signal transmitter (201).

## Revendications

1. Dispositif (101) pour déterminer une valeur estimée de la distance (311) d'un émetteur de signal lumineux (201) par rapport à un véhicule automobile (100) ; le dispositif (101) étant configuré pour,
• reconnaître, sur la base de données d'image d'une caméra (103) du véhicule (100), un ensemble d'objets (401, 402, 403, 404, 205) dans un environnement de l'émetteur de signal lumineux (201) disposé devant le véhicule (100) dans le sens de marche;
• attribuer au moins un objet (401) de l'ensemble d'objets (401, 402, 403, 404, 205) à l'émetteur de signal (201);
• déterminer une valeur estimée individuelle de la distance (411) de l'objet attribué (401) par rapport au véhicule (100);
• déterminer, sur la base des données d'image, une valeur estimée individuelle de la distance (411) de l'émetteur de signal lumineux (201) par rapport au véhicule (100); et
• déterminer la valeur estimée de la distance (311) de l'émetteur de signal lumineux (201) sur la base de la valeur estimée individuelle de la distance (411) de l'objet attribué (401) par rapport au véhicule (100) et sur la base de la valeur estimée individuelle de la distance (411) de l'émetteur de signal lumineux (201) par rapport au véhicule (100) ; la valeur estimée individuelle de la distance (411) de l'objet attribué (401) par rapport au véhicule (100) et la valeur estimée individuelle de la distance (411) de l'émetteur de signal lumineux (201) par rapport au véhicule (100) étant fusionnées par une unité de fusion à apprentissage automatique pour former la valeur estimée de la distance (311) de l'émetteur de signal lumineux (201).

2. Dispositif (101) selon la revendication 1, dans lequel
• le dispositif (101) est configuré pour attribuer le au moins un objet (401) de l'ensemble d'objets (401, 402, 403, 404, 205) à l'émetteur de signal (201) au moyen d'une unité d'attribution à apprentissage automatique; et
• l'unité d'attribution comprend en particulier un réseau neuronal artificiel entraîné.

3. Dispositif (101) selon l'une des revendications précédentes, dans lequel le dispositif (101) est configuré pour déterminer la valeur estimée individuelle de la distance (411) de l'objet attribué (401) par rapport au véhicule (100) au moyen d'une méthode de structure à partir du mouvement sur la base des données d'image.

4. **Dispositif** (101) selon l'une des revendications précédentes, dans lequel le dispositif (101) est configuré pour,
• déterminer, au moyen d'un ou plusieurs capteurs d'environnement (103) du véhicule (100), en particulier au moyen d'un capteur lidar et/ou au moyen d'un capteur radar, des données de capteur relatives à l'objet attribué (401); et
• déterminer la valeur estimée individuelle de la distance (411) de l'objet attribué (401) par rapport au véhicule (100) sur la base des données de capteur du ou des capteurs d'environnement (103).

5. Dispositif (101) selon l'une des revendications précédentes, dans lequel
• les données d'image comprennent une séquence d'images temporellement consécutives; et
• le dispositif (101) est configuré pour,
∘ déterminer, sur la base de la séquence d'images, un flux optique; et
∘ déterminer la valeur estimée individuelle de la distance (411) de l'objet attribué (401) par rapport au véhicule (100) sur la base du flux optique.

6. Dispositif (101) selon l'une des revendications précédentes, dans lequel le dispositif (101) est configuré pour,
• déterminer une valeur estimée individuelle de la distance de l'objet attribué (401) par rapport à l'émetteur de signal lumineux (201); et
• déterminer la valeur estimée de la distance (311) de l'émetteur de signal lumineux (201) également sur la base de la valeur estimée individuelle de la distance de l'objet attribué (401) par rapport à l'émetteur de signal lumineux (201).

7. Dispositif (101) selon l'une des revendications précédentes, dans lequel le dispositif (101) est configuré pour guider le véhicule (100) automatiquement dans une direction longitudinale en fonction de la valeur estimée déterminée de la distance (311) de l'émetteur de signal lumineux (201).

8. Dispositif (101) selon la revendication 7, dans lequel le dispositif (101) est configuré pour,
• déterminer, sur la base des données d'image, un état de signalisation de l'émetteur de signal lumineux (201); et
• décélérer le véhicule (100) automatiquement en fonction de l'état de signalisation afin d'amener le véhicule (100) à l'arrêt devant l'émetteur de signal lumineux (201), ou le guider automatiquement au-delà de l'émetteur de signal lumineux (201).

9. Dispositif (101) selon l'une des revendications précédentes, dans lequel l'ensemble d'objets (401, 402, 403, 404, 205) comprend un ou plusieurs parmi,
• un marquage au sol, en particulier une ligne d'arrêt (401), dans l'environnement de l'émetteur de signal (201);
• un panneau de signalisation (402) dans l'environnement de l'émetteur de signal (201);
• une voie de circulation croisant (403) à un carrefour (400) où l'émetteur de signal (201) est disposé;
• un véhicule (404) à l'arrêt à l'émetteur de signal (201); et/ou
• un mât (205) auquel l'émetteur de signal (201) est fixé.

10. Procédé (500) pour déterminer une valeur estimée de la distance (311) d'un émetteur de signal lumineux (201) par rapport à un véhicule automobile (100); le procédé (500) comprenant,
• reconnaître (501), sur la base de données d'image d'une caméra (103) du véhicule (100), un ensemble d'objets (401, 402, 403, 404, 205) dans un environnement de l'émetteur de signal lumineux (201) disposé devant le véhicule (100) dans le sens de marche;
• attribuer (502) au moins un objet (401) de l'ensemble d'objets (401, 402, 403, 404, 205) à l'émetteur de signal (201);
• déterminer (503), en particulier sur la base des données d'image, une valeur estimée individuelle de la distance (411) de l'objet attribué (401) par rapport au véhicule (100);
• déterminer, sur la base des données d'image, une valeur estimée individuelle de la distance (411) de l'émetteur de signal lumineux (201) par rapport au véhicule (100); et
• déterminer (504) la valeur estimée de la distance (311) de l'émetteur de signal lumineux (201) sur la base de la valeur estimée individuelle de la distance (411) de l'objet attribué (401) par rapport au véhicule (100) et sur la base de la valeur estimée individuelle de la distance (411) de l'émetteur de signal lumineux (201) par rapport au véhicule (100); la valeur estimée individuelle de la distance (411) de l'objet attribué (401) par rapport au véhicule (100) et la valeur estimée individuelle de la distance (411) de l'émetteur de signal lumineux (201) par rapport au véhicule (100) étant fusionnées par une unité de fusion à apprentissage automatique pour former la valeur estimée de la distance (311) de l'émetteur de signal lumineux (201).
